# EUROPEAN PATENT SPECIFICATION

(11) **EP 1 804 594 B1**
(45) Date of publication and mention of the grant of the patent: **05.10.2011**
(21) Application number: 05801576.9
(22) Date of filing: 20.10.2005
(51) Int. Cl.: A23L 1/00, A23G 3/00, A23L 1/072, A23L 1/22

(54) **PRESSED AROMA AGGLOMERATES SUITABLE FOR CONSUMPTION**
ZUM VERZEHR GEEIGNETE, GEPRESSTE AROMAAGGLOMERATE
AGGLOMERES COMPRESSES UTILISABLES POUR LA CONSOMMATION

(30) Priority: 22.10.2004 US 621494 P
(43) Date of publication of application: 11.07.2007
(73) Proprietor: Symrise AG, 37603 Holzminden (DE)
(72) Inventor: BARNEKOW, Rainer, 37696 Marienmünster (DE); WONSCHIK, Jochen, 37647 Brevörde (DE)
(74) Representative: Eisenführ, Speiser & Partner
(86) International application number: PCT/EP2005/055403
(87) International publication number: WO 2006/045742

(56) References cited:
- EP-A- 0 144 644
- US-A- 4 565 702
- US-A- 5 275 831
- US-A- 5 476 675
- US-A- 6 110 511
- US-B1- 6 620 443

## Description

The present invention relates to a pressed agglomerate (compacted material) which is suitable for consumption, a process for its preparation, its use for aromatizing products and products comprising such a pressed agglomerate.

The aromatization of products which are suitable for consumption has been known for a long time. Either liquid aromas, solid aromas (i.e. aromas applied to solid carriers, e.g. spray-dried aromas, or aromas enclosed in solid carriers) or also dried pieces of plants are conventionally used in this procedure. Dried pieces of plants can be obtained, for example, by freeze drying.

An aroma in the context of the present invention comprises at least one aroma substance, but usually two or more different aroma substances. Aromas are usually mixtures, of complex composition, of volatile components (aroma substances).

Freeze-dried pieces of plants are those from many plants, in particular from numerous varieties of fruit, and are contained in many products which are suitable for consumption, such as, for example, muesli mixtures or chocolate fillings. Such freeze-dried pieces of plants are pleasantly soft, chewable, and have a characteristic texture. They are visually, including in products suitable for consumption, pleasing and striking. Disadvantages are, in addition to the comparatively expensive preparation, in particular the weak flavour properties and the only inadequate flavour profile of the freeze-dried pieces of plants, as a result of which their flavour contribution in a consumable product containing them is low.

Certain pressed agglomerates which are based on spray-dried aromas and are prepared by compacting are already commercially obtainable. These can indeed have a pronounced and rounded flavour profile, but are very hard and are not chewable. They cannot be compared with freeze-dried pieces of plants in respect of their texture. In addition, there are also significant visual differences between these two products.

US 5,476, 675 A discloses a process for preparing a substantially dry edible flavor fiber product by admixing water, a powdered flavor, a binder and fiber together and extruding the resulting mixture. The process can be carried out by first admixing a powdered flavor material with a fiber to form a flavor-fiber and mixture, then the flavor-fiber mixture is introduced into an extruder where water is simultaneously introduced and the resulting composition, containing water, fiber and flavor is extruded to form a product.

US 4,565,702 A discloses a dietary fiber composition which is prepared by coating an insoluble fiber with a soluble fiber. The insoluble fiber is preferably derived from cereal bran by enzymatically and chemically purifying the bran. The soluble fiber is preferably pectin or an alginate, The dietary fiber composition can be used to prepare low calorie, high fiber content dietary food products.

US 6,110,511 (A) discloses an edible carrier for flavor or color or flavor and color. The edible carrier contains a starch-bearing material, a balking agent and a coloring or flavoring agent. The edible carrier has a texture ranging from soft to flinty and retains the coloring or flavoring agent when added to a high moisture medium such as a dough or batter.

It was an initial object of the present invention to provide particles which are similar to freeze-dried pieces of plants in their texture and preferably have improved flavour properties compared with these. In addition, these particles should be as easy as possible to prepare.

According to a first alternative, this initial object was achieved by a pressed agglomerate which is suitable for consumption and comprises or consists of:
a) spray-dried aroma and
   one or more constituents chosen from the following groups c) and/or d):
c) fibre material chosen from the group consisting of fruit fibre, vegetable fibre, cereal fibre and mixtures thereof,
d) one or more fats which are suitable for consumption.

The weight ratio of constituent a) (spray-dried aroma) to the sum of constituents c) (fibre material) and d) (fats) here is preferably in the range of from 30 : 1 to 1 : 2, preferably in the range of from 20 : 1 to 1 : 1, particularly preferably in the range of from 10 : 1 to 2 : 1 and very particularly preferably in the range of from 8 : 1 to 3 : 1.

The object according to a second alternative was also achieved by a pressed agglomerate which is suitable for consumption and comprises or consists of;
a) aroma (spray-dried or not),
b) maltodextrin (e.g. as a carrier substance, if the aroma is spray-dried) and
c) fibre material chosen from the group consisting of fruit fibre, vegetable fibre, cereal fibre and mixtures thereof and optionally
d) one or more fats which are suitable for consumption.

It has been found that such pressed agglomerates are very similar to freeze-dried pieces of plants in their texture; they are pleasantly soft and chewable and have a comparable texture to freeze-dried pieces of plants. However, an important advantage of such pressed agglomerates over freeze-dried pieces of plants is that the flavour of the pressed agglomerates according to the invention can be adjusted in strength (intensity) and profile almost as desired, so that, as required, these can make a significant flavour contribution in a product which is suitable for consumption (consumable) containing them. With the pressed agglomerates it is possible, astonishingly, to aromatize a consumable product completely and comprehensively, i.e. without addition of a further, optionally liquid aroma, The pressed agglomerates moreover are easy to prepare (see below).

It has furthermore been found that certain pressed agglomerates (as stated above) are considerably more stable to oxidation than freeze-dried pieces of plants. These pressed agglomerates are pressed agglomerates according to the present invention.

Such pressed agglomerate according to the invention is one which comprises or consists of:
a) 0.1 - 40 wt% aroma,
b) 30 - 80 wt.% maltodextrin,
c) 1 - 40 wt.% fibre material chosen from the group consisting of fruit fibre, vegetable fibre and cereal fibre and
d) 0.2 - 10 wt.% of one or more fats which are suitable for consumption,
in each case based on the total weight of the pressed agglomerate.

After the end of an oxidative stress test (see also Example 13), which simulated a storage time of about 12 months at 20 °C, the pressed agglomerates according to the invention showed a significantly lower decrease in sensory quality. When tasted at the end of the oxidative stress test, the freeze-dried pieces of plants had many bad notes and the original flavour was no longer detectable, whereas in the case of the pressed agglomerates according to the invention the original flavour was still clearly detectable.

A spray-dried aroma in the context of the present invention comprises at least one aroma substance (volatile) and at least one non-volatile carrier substance, which can itself be a flavouring substance, but does not have to be (such as e.g. the preferred maltodextrin). Conventional spray-dried aromas comprise at least a carrier substance, an aroma (which can also be an individual aroma substance) and further substances, such as, for example, an emulsifying substance.

Aroma encapsulation by means of spray drying, as described, for example, in US 3,159,585, US 3,971,852, US 4,532,145 or US 5,124,162, is conventional in this sector. Spray-dried aromas are commercially obtainable in many different flavour directions and particle sizes.

The aroma loading of spray-dried aroma for use in pressed agglomerates according to the invention can be varied within wide ranges, depending on the requirement and the desired sensory profile. The aroma loading is conventionally in the range of from 1 to 70 wt.%, usually in the range of 5 to 40 wt.%, based on the total weight of the spray-dried aroma.

Individual substances or substance mixtures can be employed as carrier substances for the aroma. Advantageous carrier substances are carbohydrates and/or carbohydrate polymers (polysaccharides). Carrier substances which may be mentioned are, for example, hydrocolloids, such as starches, degraded starches, chemically or physically modified starches, modified celluloses, gum arabic, ghatti gum, tragacanth, karaya, carrageenan, guar bean flour, carob bean flour, alginates, pectin, inulin or xanthan gum.

The degree of decomposition of starch is measured by the "dextrose equivalent" (DE) index, which can assume the limit values of 0 for the long-chain glucose polymer and 100 for pure glucose.

Preferred carrier substances for the aroma are maltodextrins, where maltodextrins having DE values in the range of 5 to 20 in turn are advantageous. The content of maltodextrins is preferably in the range of 30 - 85 wt.%, preferably in the range of 40 - 70 wet.%, based on the total weight of the pressed agglomerate.

It is irrelevant here what plant has originally supplied the starch for the preparation of the starch hydrolysates. Maize-based raw materials are suitable and readily available, and in order to ensure a product which is free from genetically modified constituents, for example, raw materials from tapioca, rice, wheat and potatoes can also be employed.

The term maltodextrin also includes mixtures of various maltodextrins. What maltodextrin, in particular with what DE values, is employed depends, inter alia, on the remaining constituents of the dry mixture to be compacted (see below), from which the pressed agglomerates according to the invention are prepared. If fruit powders are used in particular, as described in more detail below, maltodextrin having comparatively low DE values are recommended, preferably having DE values in the range of 5 - 10. Since fruit powders contain a noticeable content of low molecular weight sugars, which in part have a hygroscopic action (inter alia mono- and disaccharides) and which can adversely influence the processability of the dry mixture to be compacted, the less hydroscopic maltodextrins having DE values in the range of 5 - 10 are advantageous here.

Possible aromas are, for example, essential oils, fractions thereof, or individual aroma substances. Examples which may be mentioned are: extracts from natural raw materials, such as essential oils, concretes, absolutes, resins, resinoids, balsams and tinctures, such as aniseed oil; basil oil; bergamot oil; bitter almond oil; camphor oil; lemon oil; eucalyptus oil; geranium oil; grapefruit oil; ginger oil; camomile oil; spearmint oil, caraway oil, lime oil; mandarin oil; clove (blossom) oil, orange oil; peppermint oil; rose oil; rosemary oil; sage oil; yarrow oil; star aniseed oil; thyme oil; vanilla extract; juniper berry oil; wintergreen oil; cinnamon leaf oil; cinnamon bark oil; and fractions thereof and constituents isolated therefrom.

Individual aroma substances which can be a constituent of the aroma are, for example, from the following classes of substances: aliphatic esters (saturated and unsaturated), e.g. ethyl butyrate, allyl caproate; aromatic esters, e.g. benzyl acetate, methyl salicylate, organic aliphatic acids (saturated and unsaturated) e.g. acetic acid, caproic acid; organic aromatic acids; aliphatic alcohols (saturated and unsaturated); cyclic alcohols, e.g. menthol; aromatic alcohols, e.g. benzyl alcohol; aliphatic aldehydes (saturated and unsaturated) e.g. acetaldehyde; aromatic aldehydes, e.g. benzaldehyde; vanillin; ketones, e.g. menthone; cyclic ethers, e.g. 4-hydroxy-5-methylfuranone; aromatic ethers, e.g. p-methoxybenzaldehyde, guaiacol; lactones, e.g. gamma-decalactone; terpenes, e.g. limonene, linalool, terpinene, terpineol, citral.

The aromas can also be introduced in the form of juice concentrates, fruit pulps or fruit purees, i.e. in the form of thickened natural fruit products. After spray drying of juice concentrates, fruit pulps or fruit purees, the resulting spray-dried aroma is called fruit powder; these fruit powders can be employed according to the invention.

A procedure can also be followed in which juice concentrate, fruit pulps or fruit puree are employed together with a natural and/or nature-identical aroma in a or as a spray solution for the preparation of a spray-dried aroma to be used according to the invention.

In a preferred embodiment of the present invention, the pressed agglomerate comprises a fruit powder and one or more aroma substances which do not originate from a fruit.

Preferred aromas and flavour directions in the context of the present invention are: berries, citrus, pomaceous fruit, vanilla, spices, herbs and mints. Particularly preferred aromas are aromas of the flavour directions of pineapple, apple, apricot, banana, pear, blackberry, lemon, strawberry, grapefruit, guava, rose hip, blueberry, raspberry, elderberry, currant (red or black), cherry, kiwi, mandarin, mango, yellow plum, orange, papaya, passion fruit, peach, prune, tamarind, grape and plum.

Conventional additives and ingredients can also be added to a spray solution for the preparation of spray-dried aromas to be employed according to the invention, such as foodstuffs dyestuffs, sweeteners, antioxidants, flavour-influencing substances, such as sodium glutamate, vitamins, minerals etc., so that the spray-dried aromas employed according to the invention can also contain such additives.

Spray-dried aromas which can be used according to the invention preferably have particle sizes in the range of from 20 to 500 micrometres, preferably an average particle size (median value) in the range of from 70 to 300 micrometres.

Pressed agglomerates according to the invention contain as constituent c) fibre materials. According to the invention, the fibre materials are chosen from the group consisting of fruit fibres, vegetable fibres and/or cereal fibres, fruit fibres being preferred and it also being possible for the plants to originate from biological cultivation. Mixtures of fibre materials can of course also be used.

Fruit fibres are preferred, inter alia, since these have a slightly fruity flavour which does not adversely influence the flavour of a pressed agglomerate according to the invention. Cereal fibres, on the other hand, for example wheat fibres, can have the effect of a slight flavour of cardboard in the individual case, depending on the fibre content and the composition of the pressed agglomerate according to the invention.

Fibre materials are preferably prepared from high-ballast plant constituents, such as are obtained, for example, in the preparation of juice from fruit or vegetables. These plant constituents are purified mechanically and ground to a defined particle size, and various degrees of grinding, from fine powder to coarse granules, are commercially obtainable (e.g. from Rettenmaier & Söhne GmbH & Co. KG or Herbafood Ingredients GmbH). The fibre materials then chiefly contain soluble and insoluble ballast substances (e.g. cellulose, hemicellulose, pectin substances, beta-glucan), and in addition residual amounts of plant-specific flavour, which is based decisively on sugars intrinsic to the plant and on secondary plant constituents.

Thus, an apple fibre contains, for example, 45 % insoluble ballast substances, 15 % soluble ballast substances (incl. 9.3 % pectin), 24.2 % sugars (of these 3.5 % sucrose, 3.2 % glucose, 7.7 % fructose, 1.2 % sorbitol), not more than 8 % water, not more than 4.6 % proteins, 2.5 % fats and 1.6 % acids (all data in wt.%). In addition, it also contains minerals, such as potassium (3,200 mg/kg), calcium 900 mg/kg), magnesium (350 mg/kg) and sodium (320 mg/kg).

Preferred fruit fibres are apple fibre, aronia fibre, citrus fibre, currant fibre, mandarin fibre, orange fibre, lemon fibre or mixtures thereof. Apple fibre is particularly preferred.

Preferred vegetable fibres are pea fibre and tomato fibre.

Preferred cereal fibres are oat fibre and wheat fibre.

The amounts of aroma (substances), fats and (solid) acids contained in the fibre materials are not to be taken into account when determining the contents of constituents a), d) and e) (in this context see below and the attached claims), i.e. the fibre materials are regarded as only a constituent c) in the context of the present invention. On the one hand, in fact, the composition of the fibre materials varies according to the natural starting material, and on the other hand the fibre materials are used in the context of the present invention chiefly to achieve the desired properties of texture, hardness and/or bite sensation of the pressed agglomerates according to the invention and, if at all, only to a very minor degree for their flavour properties.

The pressed agglomerates according to the invention contain as constituent d) one or more fats which are suitable for consumption. According to the invention, the fats are semi-solid or solid at 20 °C. Fats are generally mono-, di- or triglycerides, where the fatty acid radicals can be identical or different in the case of di- and triglycerides. Animal fats, plant fats, hydrogenated plant oils and/or synthetic fats can be used in this context. Advantageous fats are, for example, coconut fat, cacao butter, babassu fat, palm kernel fat, pig fat, beef fat or fractions thereof which are semi-solid or solid at 20 °C, Triglycerides of myristic acid, palmitic acid or stearic acid, and in addition glycerol monostearate are likewise advantageous.

As stated above, a pressed agglomerate according to the invention is one which comprises or consists of:
a) 0.1-40 wt.% aroma,
b) 30 - 80 wt.% maltodextrin,
c) 1 - 40 wt.% fibre material chosen from the group consisting of fruit fibre, vegetable fibre and cereal fibre and
d) 0.2 -10 wt.% of one or more fats which are suitable for consumption,
in each case based on the total weight of the pressed agglomerate.

Pressed agglomerates according to the invention preferably contain as constituent e) one or more acids which are suitable for consumption and are preferably solid (at 25 °C), preferably in an amount in the range of 0.1 - 10 wt.%, particularly preferably in the range of 0.5 - 5 wt.%, based on the total weight of the pressed agglomerate. The content of acid substantially depends on the desired flavour direction and the flavour profile sought. Preferred acids are citric acid, adipic acid, malic acid, fumaric acid, succinic acid and tartaric acid, in particular citric acid and malic acid.

A preferred pressed agglomerate according to the invention is one in which the sum of constituents c) fibre materials and d) fats is at least 5 wt.%, preferably at least 10 wt.%, based on the total weight of the pressed agglomerate (sum of all the constituents a), b), c), d) and e), where present).

A particularly preferred pressed agglomerate which is suitable for consumption is one which comprises or consists of:
a) 1 - 30 wt.% aroma,
b) 40 - 70 wt.% maltodextrin,
c) 5 - 30 wt.% of one or more fruit fibres, preferably comprising or consisting of apple fibre,
d) 0.3 - 5 wt.% fat(s) and
e) 0.5 - 5 wt.% of a solid acid which is suitable for consumption.

Pressed granules according to the invention are preferably in the form of broken granules, preferably having an average particle size in the range of from 0.3 to 8 mm, preferably of from 1 to 5 mm. For the preparation of broken granules, see below.

On consumption, both on direct consumption and in a product suitable for consumption, pressed agglomerates according to the invention impart a strong flavour impression, the intensity of the flavour impression and the flavour profile being adjustable via the dosage and the composition of the (optionally spray-dried) aroma (constituent a)).

The pressed agglomerates according to the invention preferably have a water content in the range of from 0.1 to 5 wt.%, preferably in the range of from 0.1 to 3 wt.%, based on the total weight of the pressed agglomerate.

The pressed agglomerates according to the invention can contain further components, such as, for example, preservatives, antioxidants, emulsifiers, diluents, foam preventers, sugars, sugar substitutes, sugar alcohols, sweeteners, dyestuffs, colouring agents, pigments, flavour-intensifying agents, nutraceuticals, trace elements, minerals, vitamins and plant extracts.

The pressed agglomerates according to the invention can contain, for example, the following preservatives: sodium chloride, sucrose, nitrites, in particular Na, K and Ca nitrite, and sulfites, in particular Na, K and Ca sulfite. Organic acids or salts thereof can moreover be employed, in particular sorbic acid, benzoic acid, formic acid and the Na, K and Ca salts of these acids, as well as 4-hydroxybenzoic acid esters, salicylic acid and dehydracetic acid.

The pressed agglomerates according to the invention can contain, for example, the following flavour-intensifying agents: maltol, furaneol to improve the sweet flavour as well as sodium L-glutamate (MSG, glutamic acid), inosine 5'-monophosphate (IMP), 5-guanosine monophosphate (GMP), hydrolysed vegetable proteins (HVP) and yeast extracts.

Antioxidants, or substances which can intensify an antioxidative action, which are suitable as a constituent of the pressed agglomerates according to the invention are the naturally occurring tocopherols and derivatives thereof, tocotrienols, flavonoids, ascorbic acid and its salts, alpha-hydroxy acids (e.g. citric acid, lactic acid, malic acid, tartaric acid) and Na, K and Ca salts thereof, constituents, extracts and fractions thereof isolated from plants, e.g. from tea, green tea, algae, grape seeds, wheat germ, rosemary and oregano; flavonoids, quercetin and phenolic benzylamines. Propyl gallate, octyl gallate, dodecyl gallate, butylhydroxyanisole (BHA), butylhydroxytoluene (BHT), lecithins, mono- and diglycerides of edible fatty acids esterified with citric acid, orthophosphates and Na, K and Ca salts of monophosphoric acid and ascorbyl palmitate are furthermore suitable as antioxidants.

Emulsifiers which can be a constituent of the pressed agglomerates according to the invention are, for example, lecithins, Na, K, Al, Mg and Ca salts of edible fatty acids, hydroxylated lecithin, mono- and diglycerides of edible fatty acids esterified with acetic acid, lactic acid, citric acid or monoacetyl- and diacetyltartaric acid, succinylated monoglycerides, ammonium phosphatides, monosodium phosphate derivatives of mono- and diglycerides of edible fats or oils, or fatty acids which form edible fat, ethoxylated mono- and diglycerides, sugar esters (esters of sucrose and edible fatty acids), polyglycerol polyricinoleate, propylene glycol esters of edible fatty acids, lactyl esters of edible fatty acids, sodium stearoyllactyl 2-lactate, calcium stearoyllactyl 2-lactate, stearyl tartrate, sorbitan monostearate, sorbitan tristearate, sorbitan monolaurate, sorbitan monooleate, sorbitan monopalmitate, polysorbate 20, polysorbate 40, polysorbate 60, polysorbate 65, polysorbate 80, stearyl monoglyceridyl citrate, succistearin, copolymer condensates of ethylene oxide and propylene oxide, dioctyl sodium sulfosuccinate, sodium lauryl sulfate, sodium stearyl fumarate and lactylated fatty acid esters of glycerol and 1,2-propylene glycol.

As typical sugars which can be a constituent of the pressed agglomerates according to the invention there may be mentioned glucose syrups, glucose-fructose syrups, isomerose syrups, isoglucose syrups, invert sugar syrups and crystalline sugars, such as sucrose, glucose, lactose, hydrolysed lactose, sorbose, arabinose, xylose, mannose, maltose, galactose, maltotriose or fructose.

Suitable sugar substitutes which can be a constituent of the pressed agglomerates according to the invention are sugar alcohols, such as, for example, mannitol, sorbitol and sorbitol syrup, isomalt (e.g. Palatinit®), maltitol and maltitol syrup, lactitol, xylitol, erythritol, leucrose, arabinol, arabitol, adonitol, alditol, dulcitol and iditol, and also fructo-oligosaccharides (e.g. Raftilose®), oligofructose or polydextrose.

As typical sweeteners which can be a constituent of the pressed agglomerates according to the invention there may be mentioned saccharin (optionally as the Na, K or Ca salt), aspartame (e.g. NutraSweet®), cyclamate (optionally as the Na or Ca salt), acesulfame K (e.g. Sunett®), thaumatin or neohesperidin dihydrochalcone. It is of course also possible to use other sweeteners, such as stevioside, rebaudioside A, glycyrrhizin, ultrasweet, osladin, brazzein, miraculin, pentadin, phyllodulcin, dihydrochalcones, arylureas, trisubstituted guanidines, glycyrrhizin, superaspartame, suosan, sucralose (trichlorogalactosucrose, TGS), alitame, monellin or Neotame®.

The pressed agglomerates according to the invention can contain, for example, the following dyestuffs, colouring agents or pigments: lactoflavin (riboflavin), beta-carotene, riboflavin 5'-phosphate, alpha-carotene, gamma-carotene, caramel, cantaxanthin, erythrosine, curcumin, quinoline yellow, Yellow Orange S, tartrazine, bixin, norbixin (annatto, orlean), capsanthin, capsorubin, lycopene, beta-apo-8'-carotenal, beta-apo-8'-carotenic acid ethyl ester, xanthophylis (flavoxanthin, lutein, cryptoxanthin, rubixanthin, violaxanthin and rodoxanthin), fast carmine (carmic acid, cochineal), azorubine, Cochineal Red A (Ponceau 4 R), beetroot red, betanin, anthocyans, amaranth, Patent Blue V, Indigotine I (indigo carmine), chlorophylls, copper compounds of the chlorophylls, Brilliant Acid Green BS (lissamine green), Brilliant Black BN, carbo medicinalis vegetabilis, titanium dioxide, iron oxides and hydroxides, calcium carbonate, aluminium, silver, gold, Rubine Pigment BK (Lithol Rubine BK), Methyl Violet B, Victoria Blue R, Victoria Blue B, Acilan Brilliant Blue FFR (Brilliant Wool Blue FFR), Naphthol Green B, Acilan Fast Green 10 G (Alkali Fast Green 10 G), Ceres Yellow GRN, Sudan Blue II, ultramarine, phthalocyanine blue, phthalocyanine green and Fast Acid Violet R. Further naturally obtained extracts

(e.g. paprika extract, black carrot extract, red cabbage extract) can be used for colouring purposes.

The constituents (as listed above) for the preparation of a pressed agglomerate according to the invention are conventionally mixed and homogenized to form a dry mixture before carrying out a pressing agglomeration (compaction). Conventional mixers, advantageously fluidizing mixers, e.g. plough share mixers (manufacturer: Lddige), can be employed for the preparation of the dry mixture to be compacted.

The process of pressing agglomeration is understood as meaning a dry agglomeration in which as a rule a dry bulk material of smaller particles is compressed by pressing tools to form larger particles, the pressed agglomerate. In this procedure, in contrast to wet agglomeration, no material bridges are formed and there is no addition of binders. External forces are exerted on the particles by the pressing tools, so that many contacts with small contact distances are established, as a result of which interactions effect the cohesion in the pressed agglomerate at the molecular level, in particular van der Waals forces.

The pressing agglomeration can be carried out by compression or by extrusion.

In the case of extrusion, ram, strand or perforated die extrusion, for example, can be employed.

According to the invention, the pressing agglomeration is preferably carried out by means of compression with roll pressure machines or presses. In this procedure, the compression is usually carried out either by a ram and template or by rollers with smooth or profiled surfaces running in opposite directions. In addition, embodiments such as a roller press with a perforated template or a toothed wheel perforated press are advantageous.

Roller pressing with a roller compacter with smooth rollers or forming rollers (e.g. tablet-making or briquette-making) is particularly preferred. During roller pressing with smooth rollers, which is in turn advantageous here, a scab is first formed, which is then granulated. The thickness of the scab depends on the distance of the rollers, and the thickness of the scab is typically in the range of from 0.1 to 3 mm. In the case of tablet-making or briquette-making, the dry mixture to be compacted can be pressed to relatively large tablets or briquettes in a first step, which are then broken down by means of granulation in a second step.

The granules formed in the granulation (fragmentation) of the scab, briquette or tablet are called broken granules. As a rule, the broken granules are sieved in a further working step, and an upper and lower particle size can be established via the mesh width of the sieves. The fine fraction thereby obtained can be recycled into the compression, and the larger particles separated off by means of sieving can be introduced into the fragmentation again.

The broken granules preferably have an average particle size, in particular after sieving, in the range of from 0.3 to 8 mm, preferably of from 1 to 5 mm. The preferred broken granules have a bulk density in the range of from 0.3 to 0.8 kg/l, depending on the particle size and composition.

According to the invention, the compression pressure during the roller pressing is usually in the range of from 30 to 250 bar, preferably in the range of 50 to 120 bar.

Roller compacters are commercially obtainable, for example from the companies Hosokawa Bepex GmbH (Germany) or Gerteis Maschinen- und Processengineering (Switzerland).

The present invention furthermore provides a product, in particular a product which is suitable for consumption, comprising a pressed agglomerate according to the invention or a mixture of corresponding various pressed agglomerates according to the invention (in each case preferably in one of the preferred embodiments).

A product which is suitable for consumption is a product which is intended to be introduced into the human oral cavity, to remain there for a certain time and then either be swallowed, i.e. consumed (e.g. foodstuff) or removed from the oral cavity again (e.g. chewing gums). This also includes substances or products which are intended to be taken in by humans in the processed, partly processed or non-processed state. This furthermore includes all substances which are added to the foodstuff during its preparation, processing or working.

Preferred pressed agglomerates or a mixture of corresponding various pressed agglomerates according to the invention are suitable for direct consumption. They can also be employed as sprinkled particles or sprinkled mixtures (toppings), for example for surface treatment of confectionery, baked goods, ice-creams or chocolate products.

Preferred products according to the invention which are suitable for consumption are, for example, baked goods (biscuits, cakes, muffins, waffles, baking mixtures), confectionery (hard caramels, soft caramels, sweets for chewing, compressed products), dairy products (yogurts, puddings, ice-creams), chocolate goods (white, milk or plain chocolate, chocolate bars), fat compositions (fillings for baked goods, such as e.g. biscuit fillings, fatty fillings for chocolate, fatty fillings for bars), chewing gums (sugar-free, sugar-containing), cereals (rolled oats, cornflakes), muesli mixtures (conventional bulk muesli, students' mix), muesli bars, snacks and snack mixtures (sweet popcorn, mixture of fruit pieces, nuts, nut bars, fruit-and-nut bars), powder products (instant desserts in powder form, such as pudding powders or ambrosias) and sprinkling mixtures (toppings).

Depending on the product type, the content of pressed agglomerates according to the invention in a product according to the invention (which is suitable for consumption) is usually in the range of 0.1 - 30 wt.%, preferably in the range of 0.5 - 25 wt.%, based on the total weight of the product.

In confectionery, the content of pressed agglomerates according to the invention is usually in the range of 0.5 - 10 wt.%, preferably in the range of 1 - 5 wt.%, based on the total weight of the product.

In chocolate goods, the content of pressed agglomerates according to the invention is usually in the range of 0.5 - 10 wt.%, preferably in the range of 2 - 5 wt.%, based on the total weight of the product.

In fat compositions, the content of pressed agglomerates according to the invention is usually in the range of 0.5 - 15 wt.%, preferably in the range of 4 - 8 wt.%, based on the total weight of the product.

In chewing gums, the content of pressed agglomerates according to the invention is usually in the range of 0.2 - 5 wt.%, preferably in the range of 0.5 - 3 wt.%, based on the total weight of the product.

In baked goods, the content of pressed agglomerates according to the invention is usually in the range of 0.5 - 10 wt.%, preferably in the range of 2 - 5 wt.%, based on the total weight of the product.

In cereals and muesli mixtures, the content of pressed agglomerates according to the invention is usually in the range of 0.5 - 20 wt.%, preferably in the range of 5 - 15 wt.%, based on the total weight of the product.

In muesli bars and snack mixtures, the content of pressed agglomerates according to the invention is usually in the range of 0.5 - 25 wt.%, preferably in the range of 5 - 12 wt.%, based on the total weight of the product.

In powder products, the content of pressed agglomerates according to the invention is usually in the range of 0.5 - 10 wt.%, preferably in the range of 1 - 5 wt.%, based on the total weight of the product.

In the case in particular of products which are exposed to heat during their preparation or formulation, such as, for example, baked goods, the pressed agglomerates according to the invention have proved to be particularly advantageous, since they show an outstanding stability to baking.

Further product groups in which the pressed agglomerates according to the invention show outstanding visual and sensory properties are cereals, muesli mixtures and muesli bars.

In direct sensory and visual comparison of ready-to-consume biscuits containing 3 wt.% of (a) pressed agglomerates according to the invention having a raspberry flavour or (b) conventional freeze-dried raspberry pieces, it was found that the biscuits with pressed agglomerates according to the invention revealed a balanced and strong raspberry flavour and were visually pleasing. On the other hand, the biscuits with freeze-dried raspberry pieces revealed almost no raspberry flavour and had become dark brown in colour due to the baking process (180 °C) and therefore less visually pleasing.

The pressed agglomerates according to the invention also usually contain no relatively hard fruit constituents, such as the seed grains sometimes contained in freeze-dried fruit pieces (e.g. in the case of the raspberry or strawberry), which are sometimes found to be unpleasant by the consumer during consumption.

A further advantage of the pressed agglomerates according to the invention is the outstanding process accessibility in the preparation of ready-to-consume products containing pressed agglomerates according to the invention. This includes, inter alia, the fact that the density of the pressed agglomerates according to the invention can be varied. In general, the pressed agglomerates according to the invention have a higher density than and a different geometric shape to freeze-dried pieces of plants, as a result of which, for example, floating (for example during manufacture of chocolate) or demixing (for example in muesli mixtures or cereal mixtures) of the pressed agglomerates according to the invention does not take place.

In addition, further advantages over freeze-dried pieces of plants have been found in several cases. Thus, for example, in the manufacture of chocolate their unfavourable metering properties and their hygroscopic properties as well as their softened texture in the ready-to-consume chocolate are disadvantages. On the other hand, the pressed agglomerates according to the invention are easy to meter, not hygroscopic and also still show a comparatively bite-firm, crispy texture in the ready-to-consume chocolate.

The invention is explained further with the aid of the following examples. Unless stated otherwise, the data relate to the weight

### Example 1 (Spray-dried aroma)

A spray-dried raspberry aroma (containing maltodextrin (DE: 18-20), dextrose, gum arabic, antioxidant BHT) having the following particle size distribution was prepared via a pressure nozzle:
D (of 0.1): 102 micrometres,
D (of 0.5): 205 micrometres,
D (of 0.9): 370 micrometres

Spray-dried aromas of other flavour directions can be prepared analogously.

### Example 2 (Fruit powder)

Example 2a): 100 g of a strawberry fruit powder which had an average particle size of 150 micrometres were obtained, after spray drying, from a spray solution comprising 550 g strawberry puree, 59 g maltodextrin (10 DE, from potatoes) and 3 g citric acid.

Example 2b): 100 g of a raspberry fruit powder which had an average particle size of 165 micrometres were obtained, after spray drying, from a spray solution comprising 425 g raspberry puree and 53 g maltodextrin (10 DE, from potatoes).

Example 2c): 100 g of an apricot fruit powder which had an average particle size of 190 micrometres were obtained, after spray drying, from a spray solution comprising 425 g apricot puree and 61 g maltodextrin (10 DE, from maize).

### Example 3: Preparation of the pressed agglomerates

### Example 3a:

A dry mixture comprising the ingredients of the following table was pressed in a roller compacter with smooth rollers (Hosokawa Bepex GmbH) under a compression pressure of 80 bar to form a scab, which was then granulated, and the granules were sieved twice (mesh width: 1 mm and 3.1 mm). The pressed agglomerates according to the invention having a raspberry flavour which were obtained in this way thus had a particle size in the range of 1 - 3.1 mm.

| Ingredients | Wt.% | |
|---|---|---|
| spray-dried aroma, raspberry type from Example 1 | 50 | of which 30 % raspberry aroma and |
| | | 64 % maltodextrin (18-20 DE), 2 % water |
| maltodextrin from potatoes, 5 - 10 DE | 23 | maltodextrin |
| apple fibre | 21 | fibre material |
| coconut fat | 2 | fat |
| citric acid | 4 | solid acid |

### Example 3b:

A dry mixture comprising the ingredients of the following table was pressed in a roller compacter with smooth rollers (Hosokawa Bepex GmbH) under a compression pressure of 80 bar to form a scab, which was then granulated, and the granules were sieved twice (mesh width: 1 mm and 3.1 mm). The pressed agglomerates according to the invention having a strawberry flavour which were obtained in this way thus had a particle size in the range of 1 - 3.1 mm.

| Ingredients | Wt.% | |
|---|---|---|
| spray-dried aroma, strawberry type from Example 1 | 9 | of which 18 % strawberry aroma and |
| | | 75 % maltodextrin (18-20 DE), 2 % water |
| maltodextrin from potatoes, 5-10 DE | 26 | maltodextrin |
| apple fibre | 20 | fibre material |
| glycerol monostearate | 1 | fat |
| citric acid | 4 | solid acid |
| fruit powder according to Example 2a | 40 | maltodextrin (10 DE), aroma, water |

### Example 3c:

The procedure was analogous to Example 3b, using a spray-dried raspberry aroma analogously to Example 1 and raspberry fruit powder according to Example 2b.

### Example 3d:

A dry mixture comprising the ingredients of the following table was pressed in a roller compacter with smooth rollers (Hosokawa Bepex GmbH) under a compression pressure of 90 bar to form a scab, which was then granulated, and the granules were sieved twice (mesh width: 2 mm and 4 mm). The pressed agglomerates according to the invention having an apricot flavour which were obtained in this way thus had a particle size in the range of 2 - 4 mm.

| Ingredients | Wt.% | |
|---|---|---|
| maltodextrin from potatoes, 5 - 10 DE | 35 | maltodextrin |
| apple fibre | 15 | fibre material |
| palm kernel fat | 2.5 | fat |
| citric acid | 2.5 | solid acid |
| fruit powder according to Example 2c | 45 | maltodextrin (10 DE), aroma, water |

### Example 4: Determination of the demixing (segregation)

Demixing (segregation) of a solids mixture is understood as meaning undesirable separation of one or more components of the mixture.

Demixing usually occurs as a consequence of vibration, transfer between containers, transportation or other movement of the mixture.

The demixing tendency of a muesli mixture (containing various contents of rolled oats, raisins, cornflakes, sunflower seeds and nut pieces) comprising 4 wt.% of a pressed agglomerate according to the invention having a strawberry flavour was evaluated as follows:
a) visually: by visual comparison of several random samples in respect of the distribution of the constituents.
b) sensory tasting: various random samples of the muesli mixture were tested by a panel in a triangular test and the flavour was evaluated in respect of intensity and profile.

Statistically, no noticeable differences were found visually and sensorially, which demonstrates that demixing had not taken place to a relevant extent.

### Example 5: Sweet for chewing with pressed agglomerates according to the invention

### List of ingredients:

| | | |
|---|---|---|
| water | | 7.5 % |
| sugar | refined sugar C4 | 40.2 % |
| glucose syrup | dextrose 40 | 36.3 % |
| hydrogenated vegetable fat | melting point 32-36 °C | 6.5 % |
| lecithin | emulsifier (soya lecithin | 0.3 % |
| gelatine | pig gelatine | 0.8 % |
| fondant | type S30 | 4.8 % |
| pressed agglomerates from Example 3a | | 3.6 % |

### Preparation instructions:

a) Allow the gelatine to swell with water (1.8 times the amount of gelatine) at 70 °C for 2 hours;
b) boil the sugar, syrup, water, fat and lecithin at 123 °C;
c) slowly mix the gelatine solution with the boiled mixture;
d) stir in the pressed agglomerates and optionally colouring;
e) control the temperature of the resulting mass to approx. 70 °C on a cooling bench, then add the fondant and aerate on a drawing machine for approx. 3 minutes;
f) subsequently cut and package the chewing sweet mass.

On consumption of the sweets for chewing, a strong strawberry flavour is perceived during chewing and the texture of the pressed agglomerates is pleasant.

### Example 6: Compressed product with pressed agglomerates according to the invention

### List of ingredients:

| | | |
|---|---|---|
| dextrose | | 96.1 % |
| magnesium stearate | lubricant | 0.9 % |
| citric acid | | 0.2 % |
| pressed agglomerates from Example 3a | | 2.8 % |

Preparation instructions: Mix all the constituents and press to a compressed product in a suitable machine.

### Example 7: Shortbread biscuits (industrial quality) with pressed agglomerates according to the invention

### List of ingredients:

| | | |
|---|---|---|
| wheat flour | type 550 | 50.0 % |
| vegetable soft fat | melting point 24 / 26 °C | 19.0 % |
| powdered sugar | | 19.0 % |
| salt | | 0.4 % |
| ammonium bicarbonate | raising agent | 0.4 % |
| skimmed milk powder | | 1.0 % |
| maltose syrup | DE 60.5 | 1.2 % |
| water | | 5.50 % |
| pressed agglomerates from Example 3b | | 3.50 % |

### Preparation instructions:

a) Allow the powdered sugar, maltose syrup, skimmed milk powder and plant soft fat to run smooth in a Hobart laboratory kneader on level 1.
b) Dissolve the ammonium bicarbonate with some of the water and add the remaining water to a. and mix briefly.
c) Add the remaining ingredients with the pressed agglomerates to mixture a) and work to a smooth dough.
d) Roll out the dough to a thickness of approx. 3 mm with the rolling machine, if appropriate apply a pattern with a relief bar, and punch out in the desired shape.

Final thickness of the dough: approx. 2.6 mm; oven temperature: 200 °C, baking time: 6 minutes.

These biscuits with pressed agglomerates according to the invention revealed a balanced and strong strawberry flavour and were visually pleasing; the pressed agglomerates according to the invention did not become dark brown in colour due to the baking process.

### Example 8: Plain cake with pressed agglomerates according to the invention

### List of ingredients:

| | | |
|---|---|---|
| wheat flour | type 405 | 16.90 % |
| wheat starch | | 4.90 % |
| sucrose | sugar, EC quality I | 20.20 % |
| sodium chloride | | 0.14 % |
| potato flour | | 7.09 % |
| egg yolk powder | | 1.84 % |
| baking powder | | 0.70 % |
| beating emulsifier | mono-diglycerides | 1.42 % |
| water | | 13.48 % |
| purified fat | melting point approx. 34 °C | 14.89 % |
| eggs | | 17.02 % |
| beta-carotene 1 % | | 1.42 % |

### Preparation instructions:

Heat the fat to a controlled temperature. Introduce all the dry substances into the stirring bowl of the Hobart laboratory mixer. Then add the purified fat, water and eggs (egg weight approx. 60 g/egg). Finally add 4 wt.% of pressed agglomerates according to the invention (from Example 3c) and beat for 1 minute at level 1 and 2 minutes at level 3. Introduce the dough into a baking mould and bake at 180 °C for 55 minutes.

### Example 9: Waffle fat filling with pressed agglomerates according to the invention

### List of ingredients:

| | | |
|---|---|---|
| plant hard fat | melting point 33 - 35 °C | 39.4 % |
| powdered sugar | | 35.6 % |
| dextrose | grape sugar, anhydrous, microfine | 18.7 % |
| citric acid | | 0.3 % |
| pressed agglomerates from Example 3d | | 6.0 % |

Preparation instructions: Control the fat at room temperature / approx. 21 °C. Finely sieve the powdered sugar. Beat all the ingredients, including the aroma, in a Hobart laboratory stirrer. Density: 650 g/litre

### Example 10: Muesli mixture with pressed agglomerates according to the invention

### List of ingredients:

| | | |
|---|---|---|
| rolled oats | | 15.3 % |
| oat flakes | oat extrudates | 9.0 % |
| rice crispies | rice extrudates | 14.3 % |
| cornflakes | | 14.8 % |
| currants | | 3.15 % |
| chopped hazelnuts | | 2.5 % |
| glucose syrup | | 8.6 % |
| sucrose | sugar | 18.0 % |
| water | | 3.6 % |
| citric acid powder | | 0.050 % |
| pressed agglomerates from Example 3b | | 7.2 % |
| pressed agglomerates from Example 3c | | 3.5 % |

### Preparation instructions:

Mixture 1: Obtained by mixing rolled oats, oat flakes, rice crispies, cornflakes, currants, pressed agglomerates and chopped hazelnuts in a rotating mixing bowl.

Mixture 2: Heat the glucose syrup, sucrose and water, then add the citric acid.

Mixture 2 is now also introduced into the rotating mixing bowl and mixed thoroughly with mixture 1. The muesli mixture was subsequently dried on a baking sheet for approx. 8 minutes in an oven heated to 130 °C.

### Example 11: Fruity muesli bar with pressed agglomerates according to the invention

### List of ingredients:

| | | |
|---|---|---|
| sucrose | sugar | 16.0 % |
| glucose syrup | | 14.0 % |
| sorbitol P 300 | moisture-retaining agent | 5.0 % |
| plant fat | | 5.0 % |
| water | | 3.0 % |
| rolled oats | | 13.3 % |
| oat flakes | oat extrudates | 10.0 % |
| cornflakes | | 5,5 % |
| rice crispies | rice extrudates | 20.0 % |
| currants | | 4.0 % |
| pressed agglomerates from Example 3b | | 2.0 % |
| pressed agglomerates from Example 3c | | 2.0 % |
| citric acid powder | | 0.2 % |

### Preparation instructions:

Mixture 1: The rolled oats, oat flakes, cornflakes, rice crispies, currants and pressed agglomerates are mixed;

### Mixture 2

a) The plant fat is melted;
b) the sucrose, glucose syrup, sorbitol P300, plant fat and water are heated up to 120 °C and the citric acid powder is added (mixture 2)

Mixture 2 was added to mixture 1 and the resulting mixture was shaped into bars, which were cut to the desired size after cooling.

### Example 12: Ambrosia with pressed agglomerates according to the invention

### List of ingredients:

| | | |
|---|---|---|
| sugar | sucrose | 80.0 % |
| stabilizer | Hamulsion GGF | 12.0 % |
| | Hahn & Co., Lübeck | |
| citric acid | ground | 3.0 % |
| trisodium citrate | gelling aid | 2.0 % |
| green colouring | | 0.05 % |
| pressed agglomerates from Example 3b | | 2.95 % |

Preparation instructions: Stir 41 g of this mixture into 250 ml of boiling water and allow to cool.

### Example 13: Oxidative stress test

A storage time of about 12 months at 20 °C was simulated by means of an oxidative stress test.

The samples to be investigated were on the one hand the pressed agglomerates according to the invention from Example 3b (sample 1) and on the other hand commercially obtainable freeze-dried strawberry pieces (sample 2) of the same size.

In each case 10 g of the sample to be investigated were introduced into an ML Oxipres™ apparatus (manufacturer: Mikrolab Aarhus A/S, Denmark) and an oxygen pressure of about 5 bar was set at the start of the investigation. The oxygen pressure was measured every 30 minutes over a period of 168 hours. The temperature in the sample chamber was kept constant at 40 °C during the investigation.

### Result of the pressure measurement:

| Time | Oxygen pressure sample 1 (according to the invention) | Oxygen pressure sample 2 (reference) |
|---|---|---|
| 0 h (start) | 5.2 bar | 5.2 bar |
| 24 h | 5.2 bar | 4.8 bar |
| 48 h | 5.2 bar | 4.3 bar |
| 96 h | 5.1 bar | 3.7 bar |
| 120 h | 5.1 bar | 3.2 bar |
| 168 h | 5.1 bar | 2.9 bar |

The decrease in the oxygen pressure in the case of the freeze-dried strawberry pieces (sample 2) is evidence of oxidative processes in the sample.

### Sensory evaluation of the samples:

The two samples were evaluated sensorially by means of tasting before the start and after the end of the oxidative stress test.

| Time | Sample 1 (according to the invention) | Sample 2 (reference) |
|---|---|---|
| 0 h (start) | fresh, fruity, strawberry, high intensity | fresh, fruity, strawberry, low intensity |
| 168 h | cooked, strawberry, sweet, jam, low intensity | cooked, malty, musty, sour, mouldy, bad notes |

## Claims

1. Pressed agglomerate which is suitable for consumption and comprises or consists of:
a) 0.1 - 40 wt.% aroma,
b) 30 - 80 wt.% maltodextrin,
c) 1 - 40 wt.% fibre material chosen from the group consisting of fruit fibre, vegetable fibre and cereal fibre and
d) 0.2 - 10 wt.% of one or more fats which are suitable for consumption,
in each case based on the total weight of the pressed agglomerate.

2. Pressed agglomerate according to claim 1, which additionally comprises:
e) one or more preferably solid acids which are suitable for consumption, preferably in an amount in the range of 0.1 - 10 wt.%, based on the total weight of the pressed agglomerate.

3. Pressed agglomerate according to claim 1 or 2 , wherein the sum of constituents c) and d) is at least 5 wt.%, preferably at least 10 wt.%, based on the total weight of the pressed agglomerate.

4. Pressed agglomerate according to one of claims 1 to 3 which comprises:
a) 1 - 30 wt.% aroma,
b) 40 - 70 wt.% maltodextrin,
c) 5 - 30 wt.% of one or more fruit fibres, preferably comprising or consisting of apple fibre,
d) 0.3 - 5 wt.% fat(s) and
e) 0.5 - 5 wt.% of a solid acid which is suitable for consumption.

5. Pressed agglomerate according to one of claims 1 to 4, **characterized in that** aroma is a spray-dried aroma.

6. Pressed agglomerate according to one of claims 1 to 5, **characterized in that** it is in the form of broken granules.

7. Pressed agglomerate according to one of claims 1 to 6, **characterized in that** it is in the form of broken granules having an average particle size in the range of from 0.3 to 8 mm, preferably of from 1 to 5 mm.

8. Pressed agglomerate according to one of claims 1 to 7, **characterized in that** the water content is in the range of from 0.1 to 5 wt.%, based on the total weight of the pressed agglomerate.

9. Process for the preparation of a pressed agglomerate according to one of claims 1 to 8, with the following step:
- compression, preferably roller pressing, of the constituents to form the pressed agglomerate.

10. Process according to claim 9, **characterized in that** the compression pressure is in the range of from 30 to 250 bar, preferably 50 to 120 bar.

11. Use of a pressed agglomerate according to one of claims 1 to 8 for aromatizing a product, in particular a product which is suitable for consumption.

12. Product, in particular a product which is suitable for consumption, comprising a pressed agglomerate according to one of claims 1 to 8 or a mixture of corresponding various pressed agglomerates.

13. Product according to claim 12, chosen from the group consisting of baked goods, confectionery, dairy products, chocolate goods, fat compositions, chewing gums, cereals, muesli bars, muesli mixtures, snacks, snack mixtures, powder products and sprinkling mixtures.

## Patentansprüche

1. Zum Verzehr geeignetes Pressagglomerat umfassend oder bestehend aus:
a) 0,1 40 Gew.-% Aroma,
b) 30 - 80 Gew.-% Maltodextrin,
c) 1 - 40 Gew.-% Fasermaterial, ausgewählt aus der Gruppe bestehend aus Obstfaser, Gemüsefaser und Getreidefaser, und
d) 0,2 - 10 Gew.-% von einem oder mehreren zum Verzehr geeigneten Fetten,
jeweils bezogen auf das Gesamtgewicht des Pressagglomerats.

2. Pressagglomerat nach Anspruch 1, zusätzlich umfassend:
e) eine oder mehrere zum Verzehr geeignete, vorzugsweise feste Säuren, vorzugsweise in einer Menge im Bereich von 0,1 - 10 Gew.%, bezogen auf das Gesamtgewicht des Pressagglomerats.

3. Pressagglomerat nach Anspruch 1 oder 2, wobei die Summe der Bestandteile c) und d) mindestens 5 Gew.%, vorzugsweise mindestens 10 Gew.%, beträgt, bezogen auf das Gesamtgewicht des Pressagglomerats.

4. Pressagglomerat nach einem der Ansprüche 1 bis 3, umfassend:
a) 1 - 30 Gew.-% Aroma,
b) 40 - 70 Gew.-% Maltodextrin,
c) 5 - 30 Gew.-% einer oder mehrerer Obstfasern, bevorzugt umfassend oder bestehend aus Apfelfaser,
d) 0,3 - 5 Gew.-% Fett(e), und
e) 0,5 - 5 Gew.-% einer zum Verzehr geeigneten festen Säure.

5. Pressagglomerat nach einem der Ansprüche 1 bis 4, **dadurch gekennzeichnet, dass** das Aroma ein sprühgetrocknetes Aroma ist.

6. Pressagglomerat nach einem der Ansprüche 1 bis 5, **dadurch gekennzeichnet, dass** es als Bruchgranulat vorliegt.

7. Pressagglomerat nach einem der Ansprüche 1 bis 6, **dadurch gekennzeichnet, dass** es als Bruchgranulat mit einer mittleren Teilchengröße im Bereich von 0,3 bis 8 mm, bevorzugt von 1 bis 5 mm, vorliegt.

8. Pressagglomerat nach einem der Ansprüche 1 bis 7, **dadurch gekennzeichnet, dass** der Wassergehalt im Bereich von 0,1 bis 5 Gew.-% liegt, bezogen auf das Gesamtgewicht des Pressagglomerats.

9. Verfahren zur Herstellung eines Pressagglomerats nach einem der Ansprüche 1 bis 8, mit folgendem Schritt:
- Kompression, bevorzugt Walzenpressung, der Bestandteile zum Pressagglomerat.

10. Verfahren nach Anspruch 9, **dadurch gekennzeichnet, dass** der Kompressionsdruck im Bereich von 30 bis 250 bar, bevorzugt 50 bis 120 bar, liegt.

11. Verwendung eines Pressagglomerats nach einem der Ansprüche 1 bis 8 zum Aromatisieren eines Produktes, insbesondere eines zum Verzehr geeigneten Produktes.

12. Produkt, insbesondere zum Verzehr geeignetes Produkt, umfassend ein Pressagglomerat nach einem der Ansprüche 1 bis 8 oder eine Mischung entsprechender unterschiedlicher Pressagglomerate.

13. Produkt nach Anspruch 12, ausgewählt aus der Gruppe der Backwaren, Zuckerwaren, Milchprodukte, Schokoladenwaren, Fettmassen, Kaugummis, Cerealien, Müsliriegeln, Müslimischungen, Snacks, Snackmischungen, Pulverprodukte, Aufstreumischungen.

## Revendications

1. Aggloméré compressé qui convient à la consommation et comprend ou consiste en:
a) 0,1-40% en poids d'arôme,
b) 30-80% en poids de maltodextrine,
c) 1-40% en poids de matière fibreuse choisie parmi le groupe consistant en fibre de fruit, fibre de légume et fibre de céréale, et
d) 0,2-10% en poids d'une ou de plusieurs matières grasses convenant à la consommation,
dans chaque cas sur la base du poids total de l'aggloméré compressé.

2. Aggloméré compressé selon la revendication 1, lequel comprend en plus:
e) un ou de préférence plusieurs acides solides qui conviennent à la consommation, de préférence en une quantité dans la plage de 0,1-10% en poids sur la base du poids total de l'aggloméré compressé.

3. Aggloméré compressé selon la revendication 1 ou 2, dans lequel la somme des constituants c) et d) fait au moins 5% en poids, de préférence au moins 10% en poids sur la base du poids total de l'aggloméré compressé.

4. Aggloméré compressé selon l'une quelconque des revendications 1 à 3, lequel comprend:
a) 1-30% en poids d'arôme,
b) 40-70% en poids de maltodextrine,
c) 5-30% en poids de fibres d'un ou de plusieurs fruits, comprenant ou consistant de préférence en fibre de pomme,
d) 0,3-5% en poids de matière(s) grasse(s), et
e) 0,5-5% en poids d'un acide solide convenant à la consommation.

5. Aggloméré compressé selon l'une quelconque des revendications 1 à 4, **caractérisé en ce que** l'arôme est un arôme séché par atomisation.

6. Aggloméré compressé selon l'une quelconque des revendications 1 à 5, **caractérisé en ce qu'**il est sous forme de granules concassés.

7. Aggloméré compressé selon l'une quelconque des revendications 1 à 6, **caractérisé en ce qu'**il est sous forme de granules concassés ayant une grosseur moyenne de particules dans la plage de 0,3 à 8 mm, de préférence dans la plage de 1 à 5 mm.

8. Aggloméré compressé selon l'une quelconque des revendications 1 à 7, **caractérisé en ce que** la teneur en eau est dans la plage de 0,1 à 5% en poids sur la base du poids total de l'aggloméré compressé.

9. Procédé de préparation d'un aggloméré compressé selon l'une quelconque des revendications 1 à 8, par l'étape suivante:
- compression, de préférence compression à rouleau, des constituants pour former un aggloméré compressé.

10. Procédé selon la revendication 9, **caractérisé en ce que** la pression de compression est dans la plage de 30 à 250 bars, de préférence de 50 à 120 bars.

11. Utilisation d'un aggloméré compressé selon l'une quelconque des revendications 1 à 8 pour aromatiser un produit, en particulier un produit convenant à la consommation.

12. Produit, en particulier un produit convenant à la consommation, comprenant un aggloméré compressé selon l'une quelconque des revendications 1 à 8 ou un mélange de divers agglomérés compressés correspondants.

13. Produit selon la revendication 12, choisi parmi le groupe consistant en produits cuits au four, confiserie, produits laitiers, produits en chocolat, compositions grasses, gommes à mâcher, céréales, barres de muesli, mélanges de muesli, snacks, mélanges pour snacks, produits en poudre et mélanges à saupoudrer.
